# EUROPÄISCHE PATENTSCHRIFT

(11) **EP 1 123 835 B1**
(45) Veröffentlichungstag und Bekanntmachung des Hinweises auf die Patenterteilung: **03.03.2004**
(21) Anmeldenummer: 00102760.6
(22) Anmeldetag: 10.02.2000
(51) Int. Cl.: B60P 1/44

(54) **Steuereinheit für Ladebordwandsysteme**
Control unit for loading platform system
Unité de contrôle pour hayon élévateur

(43) Veröffentlichungstag der Anmeldung: 16.08.2001
(73) Patentinhaber: Sörensen Hydraulik Zweigniederlassung, Ulfborg, Filial af Sörensen Hydraulik GmbH, Tyskland, 6990 Ulfborg (DK)
(72) Erfinder: Jensen, Jens Herman, 6990 Ulfborg (DK)
(74) Vertreter: Niedmers, Ole, Dipl.-Phys.

(56) Entgegenhaltungen:
- DE-A- 3 333 131
- DE-A- 3 916 048
- DE-A- 19 756 310
- DE-A- 19 804 155
- DE-U- 29 616 247

## Beschreibung

Die Erfindung betrifft eine Steuereinheit zur manuell und/oder mit dem Fuß betätigbaren Steuerung des Anhebens und Absenkens und/oder des Hochklappens in eine vertikale Stellung und des Zurückklappens einer Ladeplattform in eine horizontale Stellung eines an Fahrzeugen, insbesondere Lastkraftfahrzeugen, befestigbaren Ladebordwandsystems, umfassend eine elektromechanische und/oder elektronische Steuerschaltung.

Ladebordwandsysteme dieser Art sind in den unterschiedlichsten Ausgestaltungen seit vielen Jahren bekannt. Regelmäßig ist bei diesen Ladebordwandsystemen wenigstens ein Hubaktuator vorgesehen, der das Anheben und Absenken der Ladeplattform bewirkt und bei bestimmten Ausgestaltungen von Ladebordwandsystemen, die eine Ladefläche eines Fahrzeuges, insbesondere eines Lastkraftfahrzeuges, verschließen sollen, auch eine sogenannte Klappakturatoreinrichtung, mittels der die Ladeplattform von einer horizontalen Stellung, in der das Anheben und Absenken einer Last bewirkt wird, in die einer vertikale Stellung verschwenkt werden kann, um eine Ladeebene eines Fahrzeugs während des Transports der Last zu verschließen. Für das Anheben und Absenken der Ladeplattform zur Ausführung der bestimmungsgemäßen Funktionen des Ladebordwandsystems wird die Ladeplattform dann beispielsweise an einem Bestimmungsort aus der vertikalen Stellung wieder in die horizontale Arbeitsstellung überführt.

Andere Ladebordwandsysteme, die keine Klappfunktion der Ladeplattform aus der Horizontalen in die Vertikale und umgekehrt benötigen, sind sogenannte Faltladebordwände, die am Ende der bestimmungsgemäßen Absenk- und Anhebfunktion in zusammengeklappter bzw. zusammengefalteter Form unter die Ladeebene im hinteren Bereich eines Fahrzeugs geklappt bzw. verbracht werden.

Die Hubaktuatoren und ggf., falls benötigt bzw. vorhanden, auch die Klappaktuatoren derartiger Ladebordwandsysteme werden regelmäßig durch hydraulisch, ggf. auch pneumatisch betriebene Kolben-Zylinder-Systeme realisiert, wobei aber auch elektromechanisch aufgebaute bzw. angetriebene Hubaktuatoren und ggf. auch Klappaktuatoren derart aufgebaut sein können.

Die Steuerung des Betriebes der Ladebordwandsysteme, d.h. das Anheben, das Absenken, das Abkippen mit der Spitze der Ladeplattform auf einen Straßenuntergrund oder dgl., das Verschwenken von der Horizontalen in die Vertikale und umgekehrt der Ladeplattform, d.h. alle Funktionen, die die Ladeplattform des Ladebordwandsystems zur Ausführung des bestimmungsgemäßen Betriebes ausführen kann, werden im wesentlichen von einer zentralen Steuereinheit aus eingeleitet bzw. beendet, die regelmäßig am Fahrzeug im hinteren Bereich in der Nähe des Ladebordwandsystems angeordnet ist und dem Bediener die Bedienung durch manuelle Betätigung von Schaltereinrichtungen, die an der Steuereinheit angeordnet sind, ermöglicht.

Ladebordwandsysteme dieser Art weisen auch regelmäßig auf der Ladeplattform selbst eine Mehrzahl von mit dem Fuß betätigbaren Schaltern auf, wobei diese Schalter ihre Signale auf die Steuereinheit liefern und dort verarbeitet und aufbereitet werden, um selbst wiederum die Hub- und ggf. Klappaktuatoren in Betrieb oder außer Betrieb zu setzen, entsprechend dem Steuerungswunsch des Bedieners.

Die Steuereinheit umfaßt regelmäßig eine elektromechanische und/oder elektronische Steuerschaltung, die die Signale handbetätigbarer Schaltereinrichtungen bzw. Funktionselemente und mit dem Fuß betätigbare Schalter aufbereitet und beispielsweise an die Hubaktuatoren und ggf. auch die Klappaktuatoren entsprechende Signale liefert, um diese in Betrieb zu setzen. Zusammengefaßt kann gesagt werden, daß der gesamte Betrieb des Ladebordwandsystems von der Steuereinheit aus gesteuert und überwacht wird.

Optisch sichtbar ist an einer derartigen Steuereinheit in einigen Fällen wenigstens ein Leuchtmittel vorhanden, mit dem beispielsweise dem Bediener aber bisher lediglich angezeigt worden ist, daß das Ladebordwandsystem eingeschaltet ist.

Es braucht nicht erwähnt zu werden, daß derartige Ladebordwandsysteme an Fahrzeugen während des bestimmungsgemäßen Betriebes sehr rauhen witterungsbedingten, aber auch handhabungsbedingten Einflüssen ausgesetzt sind. Im Straßenverkehr sind derartige Einflüsse beispielsweise Feuchtigkeit durch Schnee, Regen und Spritzwasser, Staub und sonstige Verschmutzungen, Ruß und Abgase von Kraftfahrzeugen, aber auch schädliche Einflüsse durch unsachgemäße Behandlung der Steuereinheit durch den Bediener. Bei infolge dieser Beeinflussungen auftretenden Fehlern und Fehlfunktionen der Steuereinheit konnten bisher durch verhältnismäßig einfache Maßnahmen durch entsprechende Messung beispielsweise der Signale und Spannungen und Ströme, Fehler in dem Ladebordwandsystem, insbesondere in der Steuerung des Ladebordwandsystems, ermittelt werden und entsprechende Bauteile konnten schnell ausgetauscht werden. Dadurch konnte aber das Grundproblem der voran beschriebenen vielfältigen Fehlerursachenproblematik nicht behoben werden, so daß man sich entschloß, die gesamte elektromechanische und/oder elektronische Steuerschaltung in der Steuereinheit in Kunststoff einzugießen. Diese Technik hat natürlich den Vorteil, daß die vorbeschriebenen äußeren Einflüsse unmittelbar auf die Schaltung mit den Schaltelementen keinen Einfluß mehr haben, diese Technik hat aber den Nachteil, daß bei Funktionsstörungen im Ladebordwandsystem ein unmittelbarer Zugriff auf die eingegossene elektromechanische und/oder elektronische Steuerschaltung nicht mehr möglich ist, um die aufgetretenen Fehler meßtechnisch einzukreisen und als defekt erkannte Bauelemente in der Steuereinheit selbst oder aber damit zusammenwirkende Funktionselemente des Ladebordwandsystems gezielt austauschen bzw. den Fehler gezielt beheben zu können. Dieser mit dem Eingeißen der Steuerschaltung in Kunststoff erzielte Vorteil zieht somit den vorbeschriebenen Nachteil nach sich, was aus Sicherheits- und Kostengründen unakzeptabel ist, da nunmehr bei erkannten Funktionsstörungen die ganze Steuerschaltung entfernt und durch eine neue ersetzt werden muß. Aus Sicherheitsgründen ist die Situation deshalb unakzeptabel, weil dadurch eine Unfallgefahr drastisch erhöht wird, wenn der Bediener von einem funktionsfähigen Ladebordwandsystem unter Einschluß der Steuereinheit ausgeht, dieses aber tatsächlich, weil Fehler nicht erkannt werden, nicht der Fall ist.

Es ist deshalb Aufgabe der vorliegenden Erfindung eine Steuereinheit für ein Ladebordwandsystem zu schaffen, die selbst dann, wenn die elektromechanische und/oder elektronische Steuerschaltung in Kunststoff teilweise oder vollständig eingegossen ist, ein Mindestmaß an Informationen bezüglich des Betriebszustandes des Ladebordwandsystems dem Bediener zur Verfügung stellt, so daß dieser im Lichte der erhaltenen Informationen den bestimmungsgemäßen Betrieb des Ladebordwandsystems aufnehmen, fortsetzen oder abbrechen kann oder den Betrieb gar nicht erst aufnimmt, wobei die Steuereinheit verhältnismäßig einfach, in hohem Maße betriebssicher und kostengünstig bereitstellbar sein soll.

Gelöst wird die Aufgabe der Erfindung dadurch, daß ein erstes Leuchtmittel zur Kennzeichnung eines Betriebszustandes des Ladebordwandsystems vorgesehen ist, wobei die Steuerschaltung derart aufgebaut ist, daß nach Inbetriebnahme des Ladebordwandsystems bei Lichtemission des ersten Leuchtmittels die Versorgungsspannung des Ladebordwandsystems als wenigstens ausreichend groß erkannt wird.

Der Vorteil der erfindungsgemäßen Lösung besteht im wesentlichen darin, daß mit verhältnismäßig einfachen Mitteln die Grundfunktion bzw. die Grundfunktionsvoraussetzung für das Ladebordwandsystem erfaßt wird, indem nämlich dann, wenn ein unterer festlegbarer Pegel einer Versorgungsspannung für das Ladebordwandsystem als überschritten erkannt wird, der bestimmungsgemäße Betrieb des Ladebordwandsystems möglich ist. Dabei sei darauf hingewiesen, daß derartige Ladebordwandsysteme regelmäßig von dem 12 V bzw. 24 V Gleichspannungsnetz des Fahrzeugs betrieben werden und für die bestimmungsgemäße Funktion des Ladebordwandsystems sofort erkannt wird, ob die zur Verfügung stehende Spannung ausreichend groß ist, was nach außen erfindungsgemäß dadurch angezeigt wird, daß beide Leuchtmittel Licht emittieren, d.h. ein unterer festlegbarer Spannungspegel der Versorgungsspannung überschritten ist. Aufwendige und mechanisch äußerst empfindliche Spannungsanzeigeeinrichtungen digitaler oder analoger Art sind nicht erforderlich, wodurch die Steuereinheit, wie angestrebt, einfach und kostengünstig aufgebaut und somit auch einfach und kostengünstig hergestellt werden kann.

Vorteilhaft ist es, ein zweites Leuchtmittel vorzusehen, wobei die Steuerschaltung derart aufgebaut ist, daß nach Inbetriebnahme des Ladebordwandsystems bei Lichtemission sowohl des ersten Leuchtmittels als auch des zweiten Leuchtmittels die Versorgungsspannung des Ladebordwandsystems als wenigstens ausreichend groß erkannt wird. Durch diese Maßnahme wird die Sicherheit, mit der die Versorgungsspannung erfaßt wird und erkannt wird, ob sie oberhalb oder unterhalb eines vorbestimmbaren Grenzpegels liegt, nochmals vergrößert, was ein weiterer Vorteil für den bestimmungsgemäßen Betrieb des Ladebordwandsystems in seiner Gesamtheit ist.

Gemäß einer vorteilhaften Ausgestaltung der Steuereinheit ist die Steuerschaltung derart weitergebildet, daß dann, wenn ein Leuchtmittel nach der Inbetriebnahme des Ladebordwandsystems aufgrund der Betätigung wenigstens eines Schalters zur Auslösung des Anhebens oder Absenkens der Ladeplattform kein Licht emittiert, ein Zustand erkannt wird, daß kein Steuer- und/oder Funktionselement des Ladebordwandsystems in seiner Funktion beeinträchtigt ist. Damit kann auf sehr einfache aber elegante Weise dem Bediener sofort die Information gegeben werden, daß das Ladebordwandsystem funktionsmäßig unbeeinträchtigt ist.

Bei einer noch anderen vorteilhaften weiteren Ausgestaltung der Steuereinheit ist die Steuerschaltung derart weitergebildet, daß dann, wenn ein Leuchtmittel nach der Inbetriebnahme des Ladebordwandsystems aufgrund der Betätigung wenigstens eines Schalters zur Auslösung des Anhebens oder Absenkens der Ladeplattform Licht emittiert, ein Zustand erkannt wird, daß wenigstens ein Steuer- und/oder Funktionselement des Ladebordwandsystems in seiner Funktion wenigstens beeinträchtigt ist. In diesem Falle kann der Bediener des Ladebordwandsystems sofort entscheiden, ob er, wenn das in seiner Funktion wenigstens beeinträchtigte Funktionselement nicht selbst sofort erkannt wird, entscheiden, ob er den bestimmungsgemäßen Betrieb mit dem Ladebordwandsystems überhaupt aufnimmt, auf aufgenommenem Betrieb den bestimmungsgemäßen Betrieb abbricht, oder aber den Betrieb fortsetzt, wenn sich im Falle eines funktionsmäßig beeinträchtigten Funktionselementes nach entsprechender Erkennung herausstellt, daß unter Inkaufnahme eingeschränkter Funktion des Ladebordwandsystems zumindest der begonnene Be- und Entladevorgang zu Ende geführt werden kann.

Steuer- und/oder Funktionselemente im vorangehend beschriebenen Sinne können alle Elemente elektrischer, elektromechanischer, elektronischer, mechanischer, hydraulischer und pneumatischer Art sein, wie sie im allgemeinen zur Ausbildung von Ladebordwandsystemen verwendet werden. Bei einer vorteilhaften Ausgestaltung der Steuereinheit ist das Steuer- und/oder Funktionselement wenigstens einer der mit dem Fuß betätigbaren Schalter. Die mit dem Fuß betätigbaren Schalter sind auf der Ladeplattform selbst angeordnet und stellen ein außerordentlich wichtiges Funktionselement für den bestimmungsgemäßen Betrieb des Ladebordwandsystems auch mit sehr hoher Sicherheitsrelevanz nicht nur für das Ladebordwandsystem selbst, sondern auch für den Bediener des Ladebordwandsystems dar. Mittels der mit dem Fuß betätigbaren Schalter kann über die Steuereinheit über dort vorgesehene Schaltereinrichtungen über das Betätigen der Ladeplattform hinaus die Ladeplattform wenigstens angehoben und abgesenkt werden.

Gemäß einer weiteren anderen vorteilhaften Ausgestaltung der Steuereinheit dient das erste und/oder zweite Leuchtmittel ebenfalls der Beleuchtung einer an der Steuereinheit angeordneten, von außen durch die Bedienungsperson sichtbaren Bedienungsanleitung für das Ladebordwandsystem. Diese weitere Funktion der Beleuchtung der Bedienungsanleitung erspart das gesonderte Vorsehen von Leuchtmitteln, speziell für die Bedienungsanleitung, wenn beispielsweise das Ladebordwandsystem in der Dunkelheit oder in der Dämmerung durch den Bediener bestimmungsgemäß betätigt wird. Dadurch ist eine Kostenreduzierung des gesamten Ladebordwandsystems und eine Reduzierung der dafür normalerweise nötigen gesonderten Spannungsversorgung möglich und ein Entfallen auch der gesonderten Bereitstellung von Leuchtmitteln für Austauschzwecke im Falle eines Defekts.

Grundsätzlich können die Leuchtmittel der Steuereinheit durch beliebige geeignete Leuchtmittel realisiert werden, beispielsweise herkömmliche Glühlampen. Um aber einerseits eine möglichst geringe Stromaufnahme zu gewährleisten, andererseits eine große mechanische Stabilität und eine lange Lebensdauer des Leuchtmittels bei dennoch hoher Lichtausbeute zu erreichen, ist es vorteilhaft, das Leuchtmittel durch eine lichtemittierende Diode (LED) auszubilden, wobei hier die beispielhaft vorgesehenen beiden Leuchtmittel durch lichtemittierende Dioden unterschiedlichen emittierenden Lichts in Farbe und/oder Intensität gebildet werden können.

Die Erfindung wird nun unter Bezugnahme auf die nachfolgenden schematischen Zeichnungen anhand eines Ausführungsbeispieles eingehend beschrieben. Darin zeigen:
- Fig. 1: in Form eines Blockschaltbildes die Steuereinheit des Ladebordwandsystems mit Anschlüssen zu verschiedenen Funktionselementen des Ladebordwandsystems,
- Fig. 2: eine elektrische Schaltung zur Steuerung des Ladebordwandsystems, wie sie in der Steuereinheit aufgenommen wird, und
- Fig. 3: in perspektivischer Darstellung beispielhaft das Ladebordwandsystem in kompletter Form unter Weglassung für das Verständnis der Erfindung nicht wichtiger Details.

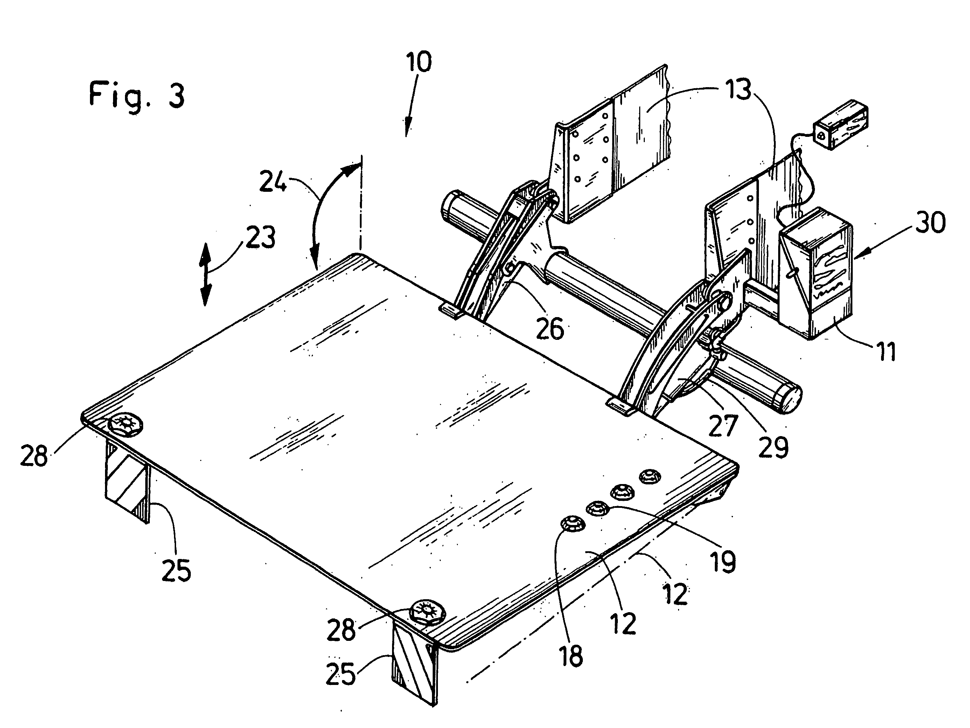

Es wird zunächst Bezug genommen auf Fig. 3, in der ein herkömmliches Ladebordwandsystem 10 dargestellt ist. Herkömmliche Ladebordwandsysteme 10 sind allgemein bekannt, so daß hier der Aufbau und die Funktion nur kurz erklärt werden. Ein typisches Ladebordwandsystem 10 ist beispielsweise in der EP-A-0 808 747 beschrieben, auf die insofern Bezug genommen wird. Bei dem hier dargestellten Ladebordwandsystem 10 handelt es sich um ein solches, bei dem lediglich eine Hubaktuatoreinrichtung 26 vorgesehen ist, die ein Anheben und Absenken in vertikaler Richtung, vgl. Pfeil 23 der Ladeplattform 12, bewirkt, auf dem eine hier nicht dargestellte Last, beispielsweise von einer Fahrbahn und dgl., auf eine Höhe angehoben werden soll, die der Ladefläche eines Fahrzeugs 13 entspricht, um die Last auf die Ladefläche des Fahrzeugs 13 zu verbringen. Vom Fahrzeug 13 sind hier lediglich Träger eines Chassis dargestellt, was zum Verständnis des Ladebordwandsystems 10 ausreicht. Die Klappaktuatoreinrichtung 27 bewirkt, daß die Ladeplattform 12 von der Horizontalen, wie in der Fig. 3 dargestellt ist, in die Vertikale geklappt werden kann, vgl. Pfeil 24, um beispielsweise die Ladefläche eines Fahrzeugs 13 zu verschließen, bzw. diese wieder freizugeben bzw. zu öffnen, um den Ent- bzw. Beladevorgang mit Lasten zu ermöglichen. Steht die Ladeplattform 12 im abgesenkten Zustand auf einem Untergrund, beispielsweise auf der Oberfläche einer Fahrbahn, kann die Ladeplattform 12 geringfügig geneigt werden, vgl. die strichpunktierte Linie mit der Bezugsziffer 12, so daß die vordere Kante der Ladeplattform auf dem Untergrund aufliegt. Die elastischen Warnfähnchen 25 klappen dabei unter die Ladeplattform 12, so daß sie das Abkippen der Ladeplattform 12 nicht behindern.

Es sei an dieser Stelle noch darauf hingewiesen, daß sogenannte Faltladebordwände, die in einen geeigneten hinteren Bereich zwischen Ladefläche und Chassis eines Fahrzeugs 13 geklappt werden können, eine Klappaktuatoreinrichtung 27 nicht benötigen, da eine Klappfunktion im vorbeschriebenen Sinne für diese Art der Ausgestaltung der Ladebordwandsysteme 10 nicht erforderlich ist. Bei dem in Fig. 3 dargestellten Ladebordwandsystem 10 sind die Hubaktuatoreinrichtung 26 und die Klappaktuatoreinrichtung 27 über Hydraulikleitungen 29, in Fig. 3 ist lediglich eine Hydraulikleitung symbolisch dargestellt, mit einem Ventilblock und einem Hydraulikmitteltank verbunden (nicht dargestellt).

In das Hydrauliksystem ist eine Pumpe bzw. sind mehrere Pumpen integriert, die mittels eines Elektromotors bzw. mehrerer Elektromotoren, ebenfalls nicht dargestellt, angetrieben werden, um den nötigen Druck des Hydraulikmittels zu erzeugen.

Am Fahrzeug ist eine Steuereinheit 11 angeordnet, die, in einem Gehäuse 30 aufgenommen, eine elektromechanische und/oder elektronische Steuerschaltung aufgenommen ist, auf der Steuerelemente wie Relais, Schalter, Widerstände, Dioden, Sicherungen und dgl. angeordnet und auf an sich bekannte Weise verbunden sind, so daß die standardmäßigen Bewegungen der Ladebordwand 12 wie Heben und Senken in der Vertikalen in Richtung des Pfeiles 23 und ein Klappen aus der Vertikalen in die Horizontale und zurück entsprechend dem Pfeil 24 über die entsprechend mit Hydraulikmittel beaufschlagten Hubaktuator- bzw.

Klappaktuatoreinrichtungen 26, 27 bewirkt werden können. Dazu sind an der Steuereinheit 11 zwei Schalteinrichtungen 21, 22 angeordnet, über die die vorbeschriebenen Bewegungen der Ladeplattform 12 durch einen Bediener gesteuert werden können. Diese Art der Steuerung, hier bei dieser dargestellten Ausgestaltung mittels einer aufgrund gesetzlicher Vorschriften vorgesehenen sogen. Zweihandsteuerung, ist der Fachwelt grundsätzlich bekannt, so daß darauf im einzelnen nicht weiter eingegangen zu werden braucht.

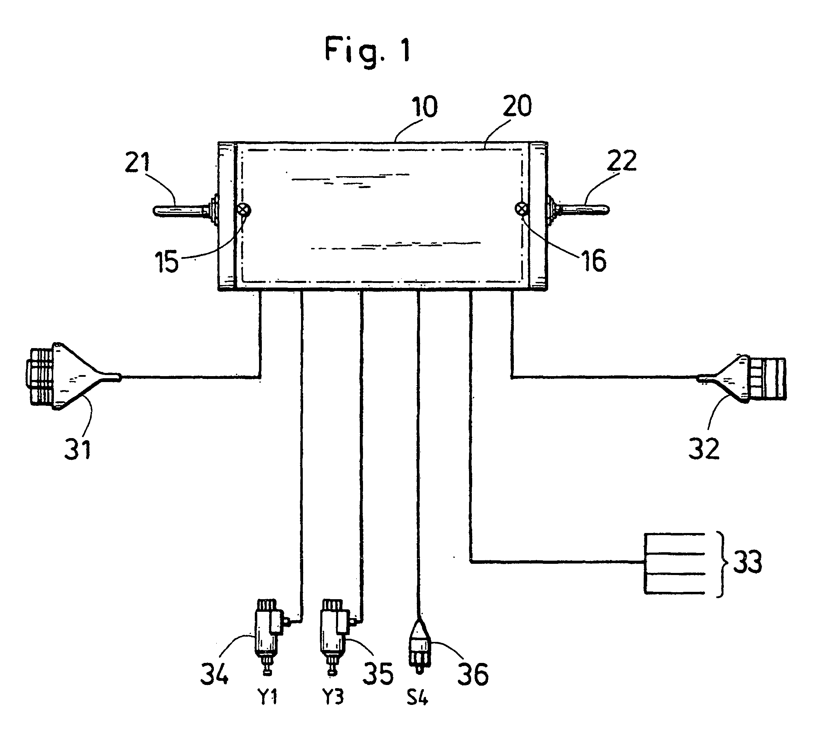

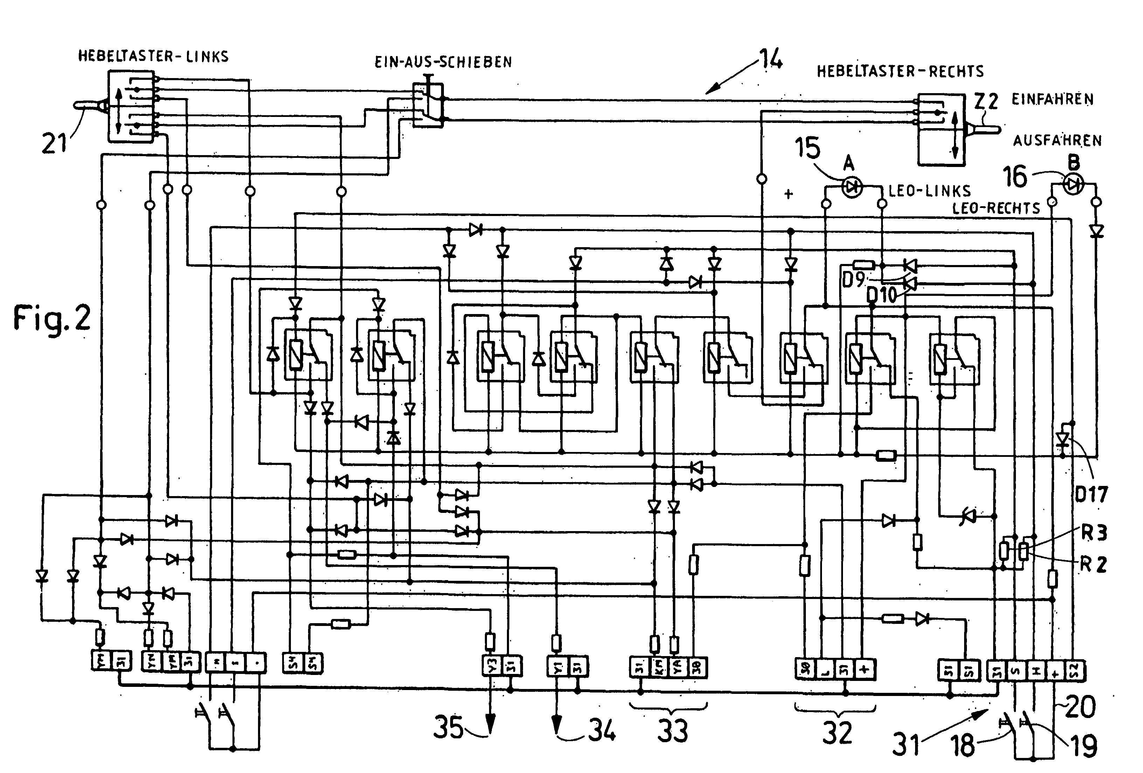

In der Steuereinheit 11, vgl. auch die Fig. 1 und 2, sind ein erstes und ein zweites Leuchtmittel 15, 16 angeordnet, und zwar derart, daß die Leuchtmittel 15, 16 vom Äußeren des Gehäuses 30 aus sichtbar sind.

Die Steuereinheit 10 ist derart konfektioniert, daß diese über eine Steckverbindung 31 mit einem geeigneten Buchsenmittel (im einzelnen nicht dargestellt) mit der Ladeplattform 12 verbunden ist. Die Stecker-Buchsen-Verbindung dient der elektrischen Verbindung mit den beiden fußbetätigbaren Schaltern 18, 19, die auf der Ladeplattform 12 angeordnet sind, sowie der Verbindung mit den Warnleuchten 28, die ebenfalls auf der Ladeplattform 12 angeordnet sind. Die beiden übrigen fußbetätigbaren Schalter, die auf der Ladeplattform 12 dargestellt sind und keine Bezugsziffern aufweisen, dienen Mehrfuß-Sicherheitsbediensystemen, die für die Erklärung bzw. das Verständnis der Erfindung nicht wichtig sind.

Auf die in Fig. 2 in ihrer Gesamtheit dargestellte Steuerschaltung 14 zur Steuerung des bestimmungsgemäßen Betriebes aller Funktionen des Ladebordwandsystems 10 wird nur insoweit im einzelnen eingegangen, wie es zum Verständnis der Erfindung erforderlich ist.

Das Ladebordwandsystem 10 wird regelmäßig vom Führerhaus eines Fahrzeugs 13 eingeschaltet, wobei dabei die elektrische Versorgungsspannung des Betriebsnetzes des Fahrzeugs 13, regelmäßig 12 V bzw. 24 V Gleichspannung (andere Spannungen sind ebenfalls möglich), über die Steckverbindung 32 auf die Steuereinheit 11 bzw. die Steuerschaltung 24 gegeben wird. Mit der Steuereinheit 11 ist bzw. sind darüber hinaus der oben erwähnte bzw. die oben erwähnten Elektromotor bzw. Elektromotoren für eine Hydraulikpumpe bzw. mehrere Hydraulikpumpen verbunden sowie einem oder mehreren Ventilen, die den nötigen Druck in den Hydraulikleitungen erzeugen, um die Hubaktuatoreinrichtung 26 und, soweit vorhanden, auch die Klappaktuatoreinrichtung 27 bestimmungsgemäß zu betätigen, vgl. auch die entsprechenden Anschlüsse auf der Steuereinheit bzw. der Steuerschaltung 14 gem. Fig. 2.

Die Steuerschaltung 14 ist derart aufgebaut, daß dann, wenn sich das Ladebordwandsystem 10 im Ruhezustand befindet, die beiden Leuchtmittel 15, 16 kein Licht emittieren. Wird danach das Ladebordwandsystem 10 von einem Bediener im Führerhaus des Fahrzeugs 13 über die Steckverbindung 32 eingeschaltet, d.h. mit Betriebsspannung, siehe oben, versorgt, emittieren beide Leuchtmittel 15, 16 Licht, was schaltungstechnisch und funktionsmäßig bedeutet, daß die Versorgungsspannung zur Steuereinheit 11 bzw. zur Steuerschaltung 14 geführt wird und das Ladebordwandsystem 10 insgesamt mit Versorgungsspannung versorgt wird.

Das Emittieren von Licht beider Leuchtmittel 15, 16 bedeutet zudem, daß die Versorgungsspannung am Elektromotor zum Antrieb der Hydraulikpumpe ebenfalls bestimmungsgemäß anliegt, sowie an dem Ventil bzw. an den Ventilen des Hydrauliksystems.

Die Steuerschaltung 14 ist so aufgebaut, daß dann, wenn das erste Leuchtmittel 15 nach ordnungsgemäßer Inbetriebnahme nicht leuchtet, damit zum Ausdruck gebracht wird, daß die Versorgungsspannung 17 des Ladebordwandsystems 10 unterhalb einer vorbestimmbaren Schwelle liegend oder als überhaupt nicht vorhanden erkannt wird. Keine Lichtemission des ersten Leuchtmittels 15 bedeutet ebenfalls, daß eine in der Steuerschaltung 14 vorhandene Sicherung, die bei Überlast anspricht und sich dann wieder einschaltet (eine sogenannte "Multifuse"), wieder einschaltet, d.h. angesprochen hat.

Schaltungstechnisch bedeutet das, daß beide Leuchtmittel 15, 16 solange leuchten, wie an den Anoden der Dioden D9 und D10 für das Leuchtmittel 15 und an der Diode D17 für das Leuchtmittel 16 eine positive Spannung anliegt.

Sobald nach ordnungsgemäßer Inbetriebnahme des Ladebordwandsystems und dem ordnungsgemäßen Emittieren von Licht des ersten und zweiten Leuchtmittels 15, 16 die Ladeplattform 12 über die Schalteinrichtungen 21, 22 der Steuereinheit 11 die Ladeplattform 12 auf an sich bekannte Weise beispielsweise auf der Fahrbahnoberfläche aufliegt, um von einem Bediener betreten zu werden, wird zum Anheben der mit dem Fuß betätigbare Schalter 18, oder, wenn die Ladeplattform 12 angehoben ist, der mit dem Fuß betätigbare Schalter 19 betätigt, so daß an sich die Ladeplattform 12 gemäß der Richtung des Pfeiles 23 angehoben bzw. abgesenkt werden kann. Die mit dem Fuß betätigbaren Schalter 18, 19 wirken mit der Steuerschaltung derart zusammen, daß dann, wenn einer dieser Schalter 18, 19 betätigt wird, über den Anschluß S oder H, vgl. Fig. 2 unten rechts, eine positive Spannung über die Widerstände R2 und/oder R3 und somit ebenfalls eine positive Spannung auf die Anode der Diode D9 bzw. D10 gelangt. Eine dieser Spannungen genügt, um den einen Pol des Leuchtmittels 15 auf das gleiche Spannungspotential des anderen Pols zu legen (24 V bzw. 12 V Gleichspannung). Die Folge ist, daß das erste Leuchtmittel 15 kein Licht emittiert. Dadurch ist es möglich zu erkennen, ob das Signal von dem oder den fußbetätigbaren Schalter bzw. Schaltern 18, 19 bis zur Steuereinheit 11 bzw. zur Steuerschaltung 14 gelangt. Wird bzw. werden der bzw. die Schalter 18, 19 betätigt und das erste Leuchtmittel 15 erlischt nicht, so ist der Schalter bzw. sind die Schalter 18, 19 defekt oder es liegt beispielsweise eine Unterbrechung der Signalleitung über die Steckverbindung 31 zwischen Steuerschaltung 14 und den Schaltern 18, 19 der Ladeplattform vor oder es liegt beispielsweise eine Unterbrechung der Steckverbindung 31 vor.

Das erste und das zweite Leuchtmittel 15, 16 sind hier vorangehend allgemein als Leuchtmittel beschrieben worden, die in Betrieb gesetzt bestimmungsgemäß Licht emittieren. Die Leuchtmittel 15, 16 können somit grundsätzlich normale Glühlampen sein. Die hier beschriebene Schaltung 14 ist allerdings derart ausgelegt, daß die Leuchtmittel 15, 16 lichtemittierende Dioden (LED) sind. Das bedeutet im vorangehend beschriebenen Sinne, daß das in Form einer lichtemittierende Diode ausgebildete Leuchtmittel 15, 16 dann kein Licht emittiert, wenn dessen Kathode auf dem gleichen Spannungspotential der Anode liegt. Die leuchtemittierende Diode als Leuchtmittel 15 würde somit erlöschen.

Wie eingangs erläutert, kann die Ladeplattform, wenn sie auf einem Untergrund aufsteht, noch um einen geringfügigen Winkel, vgl. auch die strichpunktierte dargestellte Seitenwandlinie der Ladeplattform 12 in Fig. 3, geneigt werden, d.h. die Ladeplattform 12 liegt dann mit ihrer Vorderkante auf der Fahrbahnoberfläche. An der Ladeplattform 12 ist ein Quecksilberschalter (nicht dargestellt) angeordnet. Die Funktion der Steuerschaltung 14 ist nun derart, daß ein Anheben der Ladeplattform 12 aus dieser abgeneigten Stellung nicht möglich ist. Vielmehr muß, wenn die Hebefunktion über die Schalteinrichtungen 21, 22 der Steuereinheit 11 eingeleitet wird, was gleichermaßen für die mit dem Fuß betätigbaren Schalter 18, 19 gilt, zunächst die Ladeplattform 12 in eine waagerechte Stellung überführt werden. Der Quecksilberschalter schaltet nun in der Steuerschaltung 14 von der Funktion "Anneigen" auf "Heben". Das entsprechende vom Quecksilberschalter gelieferte Signal in Form einer positiven Spannung gelangt auf die Anode der Diode 17 und das Leuchtmittel 16 in Form einer lichtemittierenden Diode (LED), die erlischt. Dadurch kann ebenfalls festgestellt werden, ob der an der Ladeplattform 12 angeordnete Quecksilberschalter in Funktion ist.

Der Vollständigkeit und der Verbesserung des Verständnisses der Steuerung des Ladebordwandsystems 10 wegen sei noch darauf hingewiesen, daß, vgl. Fig. 1, die mit der Steuereinheit 11 bzw. der Steuerschaltung 14 verbundenen Ventile 34, 35 die Ventile sind, die den Fluß des Hydraulikmittels in die Hubaktuatoreinrichtung 26 (Ventil 35) und, soweit vorhanden, in die Klappaktuatoreinrichtung 27 (Ventil 34) und entsprechend zurück steuern. Der ebenfalls mit der Steuereinheit 11 bzw. der Steuerschaltung 14 verbundene Druckschalter 36 gibt auf die Steuerschaltung 14 ein Signal, wenn die Ladeplattform 12 auf der Fahrbahnoberfläche aufliegt, so daß nur dann das Abneigen der Ladeplattform 12, vgl. auch Fig. 3, eingeleitet werden kann. Das erste und/oder das zweite Leuchtmittel 15, 16, die von der Bedienungsseite der Steuereinheit 10 aus sichtbar sind, kann auch zur Beleuchtung einer Bedienungsanleitung 20, vgl. die strichpunktierte Linie gemäß Fig. 1, die die äußeren Umrisse einer möglichen auf der Steuereinheit 11 befestigten Bedienungsanleitung symbolisch darstellt, dienen.

### Bezugszeichenliste

- 10: Ladebordwandsystem
- 11: Steuereinheit
- 12: Ladeplattform
- 13: Fahrzeug
- 14: Steuerschaltung
- 15: erstes Leuchtmittel
- 16: zweites Leuchtmittel
- 17: Versorgungsspannung
- 18: Schalter
- 19: Schalter
- 20: Bedienungsanleitung
- 21: Schalteinrichtung
- 22: Schalteinrichtung
- 23: Pfeil
- 24: Pfeil
- 25: Warnfähnchen
- 26: Hubaktuatoreinrichtung
- 27: Klappaktuatoreinrichtung
- 28 29: Hydraulikleitung
- 30: Gehäuse
- 31: Steckverbindung
- 32: Steckverbindung
- 33: Verbindung
- 34: Ventil
- 35: Ventil
- 36: Druckschalter

## Patentansprüche

1. Steuereinheit zur manuell und/oder mit dem Fuß betätigbaren Steuerung des Anhebens und Absenkens und/oder des Hochklappens in eine vertikale Stellung und des Zurückklappens einer Ladeplattform in die horizontale Stellung eines an Fahrzeugen, insbesondere Lastkraftfahrzeugen, befestigbaren Ladebordwandsystems, umfassend eine elektromechanische und/oder elektronische Steuerschaltung, **dadurch gekennzeichnet, daß** ein erstes Leuchtmittel (15) zur Kennzeichnung eines Betriebszustandes des Ladebordwandsystems vorgesehen ist, wobei die Steuerschaltung (14) derart aufgebaut ist, daß nach Inbetriebnahme des Ladebordwandsystems (10) bei Lichtemission des Leuchtmittels (15) die Versorgungsspannung (17) des Ladebordwandsystems (10) als wenigstens ausreichend groß erkannt wird.

2. Steuereinheit nach Anspruch 1, **dadurch gekennzeichnet, daß** ein zweites Leuchtmittel (16) vorgesehen ist, wobei die Steuerschaltung (14) derart aufgebaut ist, daß nach Inbetriebnahme des Ladebordwandsystems (10) bei Lichtemission sowohl des ersten Leuchtmittels (15) als auch des zweiten Leuchtmittels (16) die Versorgungsspannung (17) des Ladebordwandsystems als wenigstens ausreichend groß erkannt wird.

3. Steuereinheit nach einem oder beiden der Ansprüche 1 oder 2, **dadurch gekennzeichnet, daß** die Steuerschaltung (14) derart weitergebildet ist, daß dann, wenn ein Leuchtmittel (15, 16) nach der Inbetriebnahme des Ladebordwandsystems (10) aufgrund der Betätigung wenigstens eines Schalters (18, 19) zur Auslösung des Anhebens oder Absenkens der Ladeplattform (12) kein Licht emittiert ein Zustand erkannt wird, daß kein Steuer- und/oder Funktionselement des Ladebordwandsystems (10) in seiner Funktion beeinträchtigt ist.

4. Steuereinheit nach einem oder beiden der Ansprüche 1 oder 2, **dadurch gekennzeichnet, daß** die Steuerschaltung (14) derart weitergebildet ist, daß dann, wenn ein Leuchtmittel (15, 16) nach der Inbetriebnahme des Ladebordwandsystems (10) aufgrund der Betätigung wenigstens eines Schalters (18, 19) zur Auslösung des Anhebens oder Absenkens der Ladeplattform (12) Licht emittiert, ein Zustand erkannt wird, daß wenigstens ein Steuer- und/oder Funktionselement des Ladebordwandsystems (10) in seiner Funktion wenigstens beeinträchtigt ist.

5. Steuereinheit nach einem oder beiden der Ansprüche 3 oder 4, **dadurch gekennzeichnet, daß** der Schalter (18, 19) wenigstens ein Fußschalter auf der Ladeplattform (12) ist.

6. Steuereinheit nach einem oder mehreren der Ansprüche 3 bis 5, **dadurch gekennzeichnet, daß** das Steuer-und/oder Funktionselement wenigstens einer der mit dem Fuß betätigbaren Schalter (18, 19) ist.

7. Steuereinheit nach einem oder mehreren der Ansprüche 3 bis 5, **dadurch gekennzeichnet, daß** das Steuer-und/oder Funktionselement eine elektrische und/oder hydraulische und/oder pneumatische Leitung des Ladebordwandsystems (10) ist.

8. Steuereinheit nach einem oder mehreren 1 bis 7, **dadurch gekennzeichnet, daß** das erste und/oder zweite Leuchtmittel (15, 16) ebenfalls der Beleuchtung einer an der Steuereinheit (11) angeordneten Bedienungsanleitung für das Ladebordwandsystem (10) dient.

9. Steuereinheit nach einem oder mehreren der Ansprüche 1 bis 8, **dadurch gekennzeichnet, daß** das Leuchtmittel (15, 16) durch eine Glühlampe gebildet wird.

10. Steuereinheit nach einem oder mehreren der Ansprüche 1 bis 8, **dadurch gekennzeichnet, daß** das Leuchtmittel (15, 16) durch eine lichtemittierende Diode (LED) gebildet wird.

## Claims

1. Control unit to control, operable by hand or by the foot, the lifting and lowering and/or folding up into a vertical position and folding back into the horizontal position of a load platform of a tailgate lift system that can be attached to motor vehicles, especially heavy goods vehicles, comprising an electromechanical and/or electronic control circuit, **characterized in that** there is provided a first lamp (15) to identify an operating state of the tailgate lift system, whereby the control circuit (14) is constructed in such a way that, after bringing the tailgate lift system (10) into operation, the supply voltage (17) of the tailgate lift system (10) is recognised as being at least sufficiently large when the lamp (15) emits light.

2. Control unit according to Claim 1, **characterized in that** there is provided a second lamp (16), whereby the control circuit (14) is constructed in such a way that, after bringing the tailgate lift system (10) into operation, the supply voltage (17) of the tailgate lift system is recognised as being at least sufficiently large when both the first lamp (15) and also the second lamp (16) emit light.

3. Control unit according to one or both of the Claims 1 or 2, **characterized in that** the control circuit (14) is further constructed in such a way that if, after bringing the tailgate lift system (10) into operation, one lamp (15, 16) does not emit any light as a result of the operation of at least one switch (18, 19) to initiate the lifting or lowering of the load platform (12), a state is recognised in which no control and/or functional element of the tailgate lift system (10) is impaired in its functioning.

4. Control unit according to one or both of the Claims 1 or 2, **characterized in that** the control circuit (14) is further constructed in such a way that if, after bringing the tailgate lift system (10) into operation, one lamp (15, 16) emits light as a result of the operation of at least one switch (18, 19) to initiate the lifting or lowering of the load platform (12), a state is recognised in which at least one control and/or functional element of the tailgate lift system (10) is impaired in its functioning.

5. Control unit according to one or both of the Claims 3 or 4, **characterized in that** the switch (18, 19) is at least a foot switch on the load platform (12).

6. Control unit according to one or more of the Claims 3 to 5, **characterized in that** the control and/or function element is at least one switch (18, 19) that can be operated with the foot.

7. Control unit according to one or more of the Claims 3 to 5, **characterized in that** the control and/or function element is an electrical and/or hydraulic and/or pneumatic pipe of the tailgate lift system (10).

8. Control unit according to one or more of the Claims 1 to 7, **characterized in that** the first and/or second lamp (15, 16) also serves to illuminate operating instructions for the tailgate lift system (10) that are mounted on the control unit (11).

9. Control unit according to one or more of the Claims 1 to 8, **characterized in that** the lamp (15, 16) consists of an incandescent lamp.

10. Control unit according to one or more of the Claims 1 to 8, **characterized in that** the lamp (15, 16) consists of a light-emitting diode (LED).

## Revendications

1. Unité de commande permettant de commander manuellement et/ou avec le pied la montée et la descente et/ou le basculement en hauteur dans une position verticale et le rabattement d'une plate-forme de chargement dans la position horizontale d'un système de hayon de chargement pouvant être fixé sur des véhicules, en particulier des camions, comprenant un élément de commande électromécanique et/ou électronique, **caractérisée en ce qu'**il est prévu un premier élément lumineux (15) permettant de détecter un état de marche du système de hayon de chargement, le circuit de commande (14) étant monté de telle sorte qu'après la mise en marche du système de hayon de chargement (10) lors de l'émission de lumière de l'élément lumineux (15), la tension d'alimentation (17) du système de hayon de chargement (10) soit reconnue comme suffisamment importante.

2. Unité de commande selon la revendication 1, **caractérisée en ce qu'**il est prévu un second élément lumineux (16), le circuit de commande (14) étant monté de telle sorte qu'après la mise en marche du système de hayon de chargement (10) lors de l'émission de lumière du premier élément lumineux (15) et du second élément lumineux (16), la tension d'alimentation (17) du système de hayon de chargement soit reconnue comme étant au moins suffisamment importante.

3. Unité de commande selon l'une des revendications 1 ou 2 ou les deux, **caractérisée en ce que** le circuit de commande (14) présente une formation complémentaire telle qu'ensuite, lorsqu'un élément lumineux (15, 16), après la mise en marche du système de hayon de chargement (10) en raison de l'actionnement d'au moins un commutateur (18, 19) permettant de déclencher la montée ou la descente de la plate-forme de chargement (12), n'émet aucune lumière, un état soit détecté tel que le fonctionnement d'aucun élément de commande et/ou de fonctionnement du système de hayon de chargement (10) n'est altéré.

4. Unité de commande selon l'une des revendications 1 ou 2 ou les deux, **caractérisée en ce que** le circuit de commande (14) présente une formation complémentaire telle qu'ensuite, lorsqu'un élément lumineux (15, 16), après la mise en marche du système de hayon de chargement (10) en raison de l'actionnement d'au moins un commutateur (18, 19) permettant de déclencher la montée ou la descente de la plate-forme de chargement (12) émet de la lumière, un état est détecté, dans lequel le fonctionnement d'au moins un élément de commande et/ou de fonctionnement du système de hayon de chargement (10) est altéré.

5. Unité de commande selon l'une des revendications 3 ou 4 ou les deux, **caractérisée en ce que** le commutateur (18, 19) est au moins un commutateur à commande au pied de la plate-forme de chargement (12).

6. Unité de commande selon l'une ou plusieurs des revendications 3 à 5, **caractérisée en ce que** l'élément de commande et/ou de fonctionnement est au moins un commutateur (18, 19) pouvant être actionné avec le pied.

7. Unité de commande selon l'une ou plusieurs des revendications 3 à 5, **caractérisée en ce que** l'élément de commande et/ou de fonctionnement est une conduite électrique et/ou hydraulique et/ou pneumatique du système de hayon de chargement (10).

8. Unité de commande selon l'une ou plusieurs des revendications 1 à 7, **caractérisée en ce que** le premier et/ou second élément lumineux (15, 16) sert également à éclairer un manuel d'instruction du système de hayon de chargement (10) disposé sur l'unité de commande (11).

9. Unité de commande selon l'une ou plusieurs des revendications 1 à 8, **caractérisée en ce que** l'élément lumineux (15, 16) est formé par une lampe à incandescence.

10. Unité de commande selon l'une ou plusieurs des revendications 1 à 8, **caractérisée en ce que** l'élément lumineux (15, 16) est formé par une diode électroluminescente (DEL).
